# EUROPÄISCHE PATENTSCHRIFT

(11) **EP 1 230 283 B1**
(45) Veröffentlichungstag und Bekanntmachung des Hinweises auf die Patenterteilung: **02.08.2006**
(21) Anmeldenummer: 00966137.2
(22) Anmeldetag: 09.10.2000
(51) Int. Cl.: C08G 18/08, C08G 18/63, C08F 283/00, C09D 175/14

(54) **POLYURETHANE UND PFROPFMISCHPOLYMERISATE AUF POLYURETHANBASIS SOWIE IHRE VERWENDUNG ZUR HERSTELLUNG VON BESCHICHTUNGSSTOFFEN, KLEBSTOFFEN UND DICHTUNGSMASSEN**
POLYURETHANES AND GRAFT COPOLYMERS BASED ON POLYURETHANE AND THEIR USE IN THE PRODUCTION OF COATING MATERIALS, ADHESIVES AND SEALING MASSES
POLYURETHANNES ET COPOLYMERES GREFFES A BASE DE POLYURETHANNE ET LEUR UTILISATION POUR LA PRODUCTION DE MATIERES DE REVETEMENT, D'ADHESIFS ET DE MASSES D'ETANCHEITE

(30) Priorität: 06.11.1999 DE 19953446
(43) Veröffentlichungstag der Anmeldung: 14.08.2002
(73) Patentinhaber: BASF Coatings AG, 48165 Münster (DE)
(72) Erfinder: FIGGE, Hans-Jürgen, 48149 Münster (DE)
(74) Vertreter: Fitzner, Uwe
(86) Internationale Anmeldenummer: PCT/EP2000/009848
(87) Internationale Veröffentlichungsnummer: WO 2001/034672

(56) Entgegenhaltungen:
- EP-A- 0 608 021
- WO-A-93/24551
- WO-A-98/54266
- DE-A- 19 639 325
- PATENT ABSTRACTS OF JAPAN vol. 014, no. 014 (C-674), 12. Januar 1990 (1990-01-12) & JP 01 256512 A (MITSUBISHI GAS CHEM CO INC), 13. Oktober 1989 (1989-10-13)

## Beschreibung

Die vorliegende Erfindung betrifft neue Polyurethane und neue Pfropfinischpolymerisate auf Polyurethanbasis. Außerdem betrifft die vorliegende Erfindung neue Verfahren zur Herstellung von Polyurethanen und Pfropfmischpolymerisaten auf Polyurethanbasis. Des weiteren betrifft die vorliegende Erfindung die Verwendung der neuen Polyurethane und der neuen Pfropfmischpolymerisate auf Polyurethanbasis zur Herstellung von Beschichtungsstoffen, Klebstoffen und Dichtungsmassen.

Pfropfmischpolymerisate, die in Wasser löslich oder dispergierbar sind, sind aus der europäischen Patentschrift EP-A-0 608 021 bekannt. Sie bestehen aus einem Kern aus einem hydrophoben olefinisch ungesättigten Polyurethan und einer Schale aus einem hydrophilen Acrylatcopolymeren, die eine Säurezahl von 30 bis 120 mg KOH/g aufweist. Das hydrophobe olefinisch ungesättigte Polyurethan wird hergestellt, indem man niedermolekulare Diole oder Polyesterdiole einer Säurezahl von weniger als 5 mg KOH/g mit Diisocyanaten und 1-(1-Isocyanato-1-methylethyl)-3-(1-methylethenyl)-benzol (Dimethyl-m-isopropenylbenzylisocyanat) umsetzt, wodurch insbesondere endständige Ethylenarylengruppen resultieren. Im Anschluß daran wird ein Gemisch aus olefinisch ungesättigte Monomeren in der Gegenwart des hydrophoben olefinisch ungesättigten Polyurethans in Lösung polymerisiert, wonach das erhaltene Pfropfinischpolymerisat neutralisiert und in Wasser dispergiert wird, wodurch eine Sekundärdispersion resultiert.

Wesentlich hierbei ist, daß die olefinisch ungesättigten Gruppen über Verbindungen, die mindestens eine olefinisch ungesättigte Gruppe und mindestens eine Isocyanatgruppe im Molekül enthalten, in die Polyurethane eingeführt werden müssen.

Aus dem deutschen Patent DE-C-197 22 862 ist ein Pfropfmischpolymerisat bekannt, das erhältlich ist, indem man in einer Dispersion eines olefinisch ungesättigten, hydrophile funktionelle Gruppen aufweisenden Polyurethans mit im statistischen Mittel 0,05 bis 1,1 polymerisierbaren Doppelbindungen pro Molekül olefinisch ungesättigte Monomere polymerisiert, wodurch die Primärdispersion des Pfropfinischpolymerisats resultiert. Außerdem geht aus dem deutschen Patent ein Pfropfmischpolymerisat hervor, das erhältlich ist, indem man in einer organischen Lösung eines olefinisch ungesättigten hydrophoben Polyurethans mit im statistischen Mittel 0,05 bis 1,1 polymerisierbaren Doppelbindungen pro Molekül eine Mischung aus olefinisch ungesättigten Monomeren polymerisiert, die mindestens ein Carbonsäuregruppen enthaltendes Monomer aufweist. Das resultierende Pfropfmischpolymerisat wird neutralisiert und in einem wäßrigem Medium dispergiert, wodurch die Sekundärdispersion resultiert.

Vergleichbare Polyurethane und hierauf basierende Pfropfmischpolymerisate gehen auch aus der deutschen Patentanmeldung DE-A-196 45 761 oder aus den europäischen Patentanmeldungen EP-A-0 522 419 oder EP-A-0 522 420 hervor.

Diesen bekannten olefmisch ungesättigten Polyurethanen ist gemeinsam, daß die olefinisch ungesättigten Gruppen über Verbindungen, die mindestens eine isocyanatreaktive funktionelle Gruppe und mindestens eine olefinisch ungesättigte Doppelbindung enthalten, eingefiihrt werden müssen.

Nachteilig ist hierbei, daß für die Bereitstellung der Verbindungen zur Einführung olefinisch ungesättigter Doppelbindungen in Polyurethane ein erhöhter synthetischer Aufwand getrieben werden muß.

Nicht zuletzt kann sich in manchen Fällen der Gehalt der Polyurethane an olefinisch ungesättigten Gruppen als zu niedrig für eine vollständige Pfropfung erweisen, so daß ein großer Teil der aufzupfropfenden Monomere separate Homo- und/oder Copolymerisate neben dem Poylurethan bildet, die die anwendungstechnischen Eigenschaften der Pfropfmischpolymerisate und der hiermit hergestellten.Beschichtungsstoffe, Klebstoffe und Dichtungsmassen beeinträchtigen können. Dieser Nachteil ist nicht ohne weiteres durch eine Erhöhung des Doppelbindungsanteils in den zu pfropfenden Polyurethanen zu beheben, weil hierdurch andere wichtige anwendungstechnische Eigenschaften der Polyurethane in Mitleidenschaft gezogen werden.

Aufgabe der vorliegenden Erfindung ist es, neue olefinisch ungesättigte hydrophile oder hydrophobe Polyurethane bereitzustellen, die eine besonders hohe Pfropfaktivität aufweisen und in einfacher Weise erhältlich sind. Des weiteren ist es die Aufgabe der vorliegenden Erfindung neue Pfropfmischpolymerisate auf der Basis der neuen olefinisch ungesättigten hydrophilen oder hydrophoben Polyurethane bereitzustellen.

Demgemäß wurde das neue olefinisch ungesättigte hydrophile oder hydrophobe Polyurethan (B) gefunden, das herstellbar ist, indem man
(1) ein Polyurethanpräpolymer (B1), herstellbar, indem man zumindest
   (B1.1) mindestens ein Polyisocyanat und
   (B1.2) mindestens ein gesättigtes und/oder olefinisch ungesättigtes Polyesterpolyol, welches durch Umsetzung von
      - gegebenenfalls sulfonierten gesättigten und/oder ungesättigten Polycarbonsäuren oder deren veresterungsfähigen Derivaten, gegebenenfalls zusammen mit Monocarbonsäuren, sowie
      - gesättigten und/oder ungesättigten Polyolen, gegebenenfalls zusammen mit Monoolen,
      hergestellt wurde,
   in einer oder in mehreren Stufen miteinander umsetzt, so daß im statistischen Mittel noch mindestens eine freie Isocyanatgruppe pro Molekül verbleibt;
   mit
(2) mindestens einer Verbindung (B1.3) mit mindestens zwei isocyanatreaktiven funktionellen Gruppen umsetzt, so daß keine freien Isocyanatgruppen mehr nachweisbar sind, wonach man
(3) das resultierende Polyurethan mit mindestens einem Anhydrid einer alpha,beta-ungesättigten Carbonsäure umsetzt.

Im folgenden wird das neue olefinisch ungesättigte hydrophile oder hydrophobe Polyurethan (B) als "erfindungsgemäßes Polyurethan (B)" bezeichnet.

Des weiteren wurde das neue Pfropfmischpolymerisat gefunden, das
(A) mindestens ein aufgepfropftes (Co)Polymerisat und
(B) mindestens ein Polyurethan,
   enthält und das herstellbar ist, indem man mindestens ein Monomer (a) in Lösung oder in Emulsion in Gegenwart mindestens eines erfmdungsgemäßen Polyurethans (B) radikalisch (co)polymerisiert.

Im folgenden wird das neue Pfropfmischpolymerisat auf der Basis des erfindungsgemäßen Polyurethans (B) als "erfindungsgemäßes Pfropfmischpolymerisat" bezeichnet.

Im Hinblick auf den Stand der Technik war es überraschend und für den Fachmann nicht vorhersehbar, daß die Aufgabe, die der vorliegenden Erfindung zugrunde lag, mit Hilfe der erfindungsgemäßen Polyurethane (B) und der erfindungsgemäßen Pfropfmischpolymerisate gelöst werden konnte. Insbesondere überraschte, daß die erfindungsgemäßen Polyurethane (B) und die erfindungsgemäßen Pfropfmischpolymerisate in einfacher Weise gezielt hergestellt werden können, ohne daß es hierbei zu einer Schädigung der erfindungsgemäßen Produkte kommt. Des weiteren überraschte die außerordentlich breite Verwendbarkeit der erfindungsgemäßen Polyurethane (B) und der erfindungsgemäßen Pfropfmischpolymerisate.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, mit verwiesen.

Das erfindungsgemäße Polyurethan (B) enthält mindestens eine seitenständige und/oder mindestens eine endständige olefinisch ungesättigte Gruppe. Mit anderen Worten: das erfindungsgemäße Polyurethan (B) enthält mindestens eine seitenständige, mindestens eine endständige oder mindestens eine seitenständige und mindestens eine endständige olefinisch ungesättigte Gruppe.

Beispiele geeigneter olefinisch ungesättigter Gruppen sind (Meth)Acrylat-, Ethacrylat-, Crotonat- oder Cinnamatgruppen, von denen die Methacrylat- und Acrylatgruppen, insbesondere aber die Methacrylatgruppen, besonders vorteilhaft sind und erfindungsgemäß besonders bevorzugt angewandt werden.

Darüber hinaus kann das erfindungsgemäße Polyurethan (B) noch weitere seitenständige und/oder endständige olefinisch ungesättigte Gruppen wie Ethenylarylen-, Vinylether-, Vinylester-, Dicyclopentadienyl-, Norbornenyl-, Isoprenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen enthalten.

Das erfindungsgemäße Polyurethan (B) ist im vorstehend genannten Sinne hydrophil oder hydrophob. Hinsichtlich ihrer Verwendung zur Herstellung der erfindungsgemäßen Pfropfmischpolymerisate bieten die hydrophilen erfindungsgemäßen Polyurethane (B) gewisse Vorteile und werden deshalb bevorzugt verwendet.

Die hydrophilen erfindungsgemäßen Polyurethane (B) enthalten hydrophile funktionelle Gruppen. Beispiele geeigneter hydrophiler funktioneller Gruppen sind die nachstehend beschriebenen, von denen Carbonsäuregruppen und/oder Carboxylatgruppen von besonderem Vorteil sind und deshalb erfmdungsgemäß ganz besonders bevorzugt verwendet werden.

Die erfindungsgemäßen Polyurethane (B) können im statistischen Mittel mindestens eine blockierte Isocyanatgruppe pro Molekül enthalten. Vorzugsweise werden mindestens zwei blockierte Isocyanatgruppen angewandt. Die blockierten Isocyanatgruppen können hinsichtlich der Polymerhauptkette des erfindungsgemäßen Polyurethans (B) endständig oder seitenständig sein. Die blockierten Isocyanatgruppen resultieren aus der Umsetzung freier Isocyanatgruppen mit geeigneten Blockierungsmitteln. Beispiele geeigneter Blockierungsmittel sind die nachstehend beschriebenen. Im allgemeinen werden diese Gruppen dann verwendet, wenn die erfindungsgemäßen Polyurethane (B) selbstvernetzende Eigenschaften aufweisen sollen.

Bekanntermaßen bezeichnet der Begriff "selbstvernetzend" die Eigenschaft eines Bindemittels (zu dem Begriff vgl. Römpp Lexikon Lacke und Druckfarben, Georg Thieme Verlag, Stuttgart, New York, 1998, »Bindemittel«, Seiten 73 und 74), mit sich selbst Vernetzungsreaktionen einzugehen. Voraussetzung hierfür ist, das in den Bindemitteln bereits beide Arten von komplementären reaktiven funktionellen Gruppen enthalten sind, die für eine Vernetzung notwendig sind. Als fremdvemetzend werden dagegen solche Beschichtungsstoffe, Klebstoffe und Dichtungsmassen bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Das erfindungsgemäße Polyurethan (B) ist erhältlich, indem man in einem ersten Verfahrensschritt ein Polyurethanpräpolymer (B1), das mindestens eine freie Isocyanatgruppe enthält, herstellt.

Das Polyurethanpräpolymer (B1) ist linear, verzweigt oder kammartig, insbesondere aber linear, aufgebaut. Hierbei enthält das lineare Polyurethanpräpolymer (B1) vorzugsweise zwei freie Isocyanatgruppen, insbesondere zwei endständige freie Isocyanatgruppen. Die verzweigten oder kammartig aufgebauten Polyurethanpräpolymere (B1) enthalten vorzugsweise mindestens zwei, insbesondere mehr als zwei freie Isocyanatgruppen, wobei endständige freie Isocyanatgruppen bevorzugt sind.

Methodisch gesehen weist die Herstellung der erfindungsgemäß zu verwendenden Polyurethanpräpolymere (B1) keine Besonderheiten auf, sondern erfolgt beispielsweise wie in den Patentschriften DE-C-197 22 862, DE-A-196 45 761, EP-A-0 522 419 oder EP-A-0 522 420 beschrieben, durch Umsetzung mindestens eines Polyisocyanats (B 1.1), insbesondere eines Diisocyanats (B 1.1), mit mindestens einem Polyol (B1.2), insbesondere einem Diol (B1.2), wobei die Isocyanatkomponente (B1.1) im molaren Überschuß angewandt wird, so daß endständige freie Isocyanatgruppen resultieren.

Vorzugsweise werden für die Herstellung der Polyurethanpräpolymere (B1) Diisocyanate (B 1.1) sowie gegebenenfalls in untergeordneten Mengen Polyisocyanate (B 1.1) zur Einführung von Verzweigungen verwendet. Im Rahmen der vorliegenden Erfindung sind unter untergeordneten Mengen Mengen zu verstehen, die kein Gelieren der Polyurethanpräpolymere (B1) bei ihrer Herstellung bewirken. Letzteres kann auch noch durch die Mitverwendung geringer Mengen an Monoisocyanaten verhindert werden.

Beispiele für geeignete Diisocyanate (B1.1) sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, l-Isocyanato-2-(3-isocyanatoeth-l-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendüsocyanat oder Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, vorzugsweise 25 Gew.% und insbesondere 20 Gew.%, wie es den Patentschriften DE-A-44 14 032, GB-A-1220717, DE-A-16 18 795 oder DE-A-17 93 785 beschrieben wird; Toluylendiisocyanat, Xylylendüsocyanat, Bisphenylendüsocyanat, Naphthylendiisocyanat oder Diphenylmethandüsocyanat.

Beispiele geeigneter Polyisocyanate (B1.1) sind die Isocyanurate der vorstehend beschriebenen Diisocyanate.

Beispiele gut geeigneter .Monoisocyanate sind Phenylisocyanat, Cyclohexylisocyanat oder Stearylisocyanat oder Vinylisocyanat, Methacryloylisocyanat und/oder 1-(1-Isocyanato-1-methylethyl)-3-(1-methylethenyl)-benzol (TMI® der Firma CYTEC), durch die ein Teil der olefinisch ungesättigten Gruppen, insbesondere Ethenylarylengruppen der Formel 1, in die Polyurethanpräpolymeren (B1) eingeführt werden kann.

Die Polyole (B1.2) sind gesättigte oder olefinisch ungesättigte Polyesterpolyole, welche durch Umsetzung von
- gegebenenfalls sulfonierten gesättigten und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen,
hergestellt werden.

Beispiele für geeignete Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure oder Dodecandicarbonsäure oder Maleinsäure, Fumarsäure oder Itaconsäure von denen Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Weitere Beispiele für geeignete Polycarbonsäuren sind polymere Fettsäuren, insbesondere solche mit einem Dimerengehalt von mehr als 90 Gew.%, die auch als Dimerfettsäuren bezeichnet werden.

Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure oder Fettsäuren natürlich vorkommender Öle sowie Acrylsäure, Methacrylsäure, Ethacrylsäure oder Crotonsäure, durch die ein Teil der olefmisch ungesättigten Gruppen in das Polyurethanprepolymer (B1) eingeführt werden kann. Bevorzugt wird als Monocarbonsäure Isononansäure eingesetzt.

Beispiele geeigneter Polyole sind Diole und Triole, insbesondere Diole. Üblicherweise werden Triole neben den Diolen in untergeordneten Mengen verwendet, um Verzweigungen in die Polyesterpolyole (B1.2) einzuführen. Im Rahmen der vorliegenden Erfindung sind unter untergeordneten Mengen Mengen zu verstehen, die kein Gelieren der Polyesterpolyole (B1.2) bei ihrer Herstellung bewirken.

Beispiele geeigneter Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpropandiol-l,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3, 2-Cyclohexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol oder 1,3-(2'-Hydroxypmpyl)-benzol.

Von diesen Diolen sind 1,6-Hexandiol und Neopentylglykol besonders vorteilhaft und werden deshalb besonders bevorzugt verwendet.

Die vorstehend genannten Diole können auch als Diole (B1.2) für die Herstellung der Polyurethanpräpolymere (B1) eingesetzt werden.

Beispiele geeigneter Triole sind Trimethylolethan, Trimethylolpropan oder Glycerin, insbesondere Trimethylolpropan.

Die vorstehend genannten Triole können auch als Triole (B1.2) für die Herstellung der Polyurethanpräpolymere (B1) eingesetzt werden (vgl. die Patentschrift EP-A-0 339 433).

Gegebenenfalls können untergeordnete Mengen von Monoolen mit verwendet werden. Beispiele geeigneter Monoole sind Alkohole oder Phenole wie Ethanol, Propanol, n-Butanol, sec.-Butanol, tert.-Butanol, Amylalkohole, Hexanole, Fettalkohole, Phenol oder Allylalkohol, durch den ein Teil der olefinisch ungesättigten Gruppen in das Polyurethanpräpolymer (B1) eingeführt werden kann.

Die Herstellung der Polyesterpolyole (B1.2) kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole (B1.2) sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR)ₘ- CH₂-O-)- aus. Hierbei ist der Index m bevorzugt 4 bis 6 und der Substitutent R = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole. (B1.2) wird das unsubstituierte Epsilon-Caprolacton, bei dem m den Wert 4 hat und alle R-Substituenten Wasserstoff sind, bevorzugt. Die Umsetzung mit Lacton wird durch niedermolekulare Polyole wie Ethyleriglykol, 1,3-Propandiol, 1,4-Butändiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden.

Durch die Polyetherdiole (B1.2) können die nichtionischen hydrophilen funktionellen Gruppen (b3) oder ein Teil hiervon in die Hauptkette(n) der Polyurethanpräpolymeren (B1) eingeführt werden.

Für die Herstellung der erfindungsgemäß zu verwendenden Polyurethanpräpolymeren (B1) können noch weitere Ausgangsverbindungen verwendet werden, um das Eigenschaftsprofil der erfindungsgemäßen Polyurethane (B) und der erfindungsgemäßen Pfropfmischpolymerisate in vorteilhafter Weise zu variieren.

Sollen die erfindungsgemäßen Polyurethane (B) und die erfindungsgemäßen Pfropfmischpolymerisate selbstvernetzende Eigenschaften aufweisen, kann mindestens eine Verbindung (B1.4) mit mindestens einer blockierten Isocyanatgruppe und mindestens zwei isocyanatreaktiven funktionellen Gruppen verwendet werden. Beispiele geeigneter isocyanatreaktiver Gruppen sind -SH, - NH₂, >NH, -OH, -O-(CO)-NH-(CO)-NH₂ oder -O-(CO)-NH₂, von denen die primären und sekundären Aminogruppen und die Hydroxylgruppe von Vorteil und die Hydroxylgruppen von besonderem Vorteil sind. Beispiele geeigneter Blockierungsmittel (B1.7) sind die aus der US-Patentschrift US-A-4,444,954 bekannten Blockierungsmittel, von denen die Oxime und Ketoxime xiii), insbesondere die Ketoxime xiii), speziell Methylethylketoxim, besondere Vorteile bieten und deshalb besonders bevorzugt verwendet werden. Die blockierten Isocyanatgruppen können aber auch aus der Umsetzung der freien Isocyanatgruppen des Polyurethanpräpolymeren (B1) mit den Blockierungsmitteln (B 1.7) resultieren.

Zur Einführung zusätzlicher olefinisch ungesättigter Gruppen, insbesondere der vorstehend beschriebenen, kann mindestens eine Verbindung (B1.5) mit mindestens einer olefinisch ungesättigten Gruppe und mindestens zwei isocyanatreaktiven funktionellen Gruppen verwendet werden. Beispiele geeigneter isocyanatreaktiver funktioneller Gruppen sind die vorstehend beschriebenen. Beispiele geeigneter olefinisch ungesättigter Gruppen sind ebenfalls die vorstehend beschriebenen. Beispiele geeigneter Verbindungen (B1.5) sind aus den Patentschriften DE-C-197 22 862, DE-A-196 45 761, EP-A-0 522 419 oder EP-A-0 522 420 bekannt. Alternativ können die zusätzliche olefinisch ungesättigten Gruppen auch über die vorstehend beschriebenen Verbindungen mit mindestens einer olefinisch ungesättigten Gruppe und einer isocyanatreaktiven funktionellen Gruppe eingeführt werden.

Für die Herstellung der hydrophilen Polyurethane (B) werden in die Polyurethanpräpolymere (B1) des weiteren Verbindungen (B 1.6) mit mindestens einer hydrophilen funktionellen Gruppe und mindestens zwei isocyanatreaktiven funktionellen Gruppen eingebaut.

Die resultierenden hydrophilen Polyurethanpräpolymere (B1) enthalten entweder
(b1) hydrophile funktionelle Gruppen, die durch Neutralisationsmittel und/oder Quaternisierungsmittel in Kationen überführt werden können, und/oder kationische Gruppen, insbesondere Ammoniumgruppen,
   oder
(b2) funktionelle Gruppen, die durch Neutralisationsmittel in Anionen überführt werden können, und/oder anionische Gruppen, insbesondere Carbonsäure- und/oder Carboxylatgruppen,
   und/oder
(b3) nichtionische hydrophile Gruppen, insbesondere Poly(alkylenether)-Gruppen.

Beispiele geeigneter erfmdungsgemäß zu verwendender funktioneller Gruppen (b1), die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfmdungsgemäß zu verwendender kationischer Gruppen (b1) sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen, insbesondere aber tertiäre Sulfoniumgruppen.

Beispiele geeigneter erfindungsgemäß zu verwendender funktioneller Gruppen (b2), die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (b2) sind Carboxylat-, Sulfonat- oder Phosphonatgruppen, insbesondere Carboxylatgruppen.

Beispiele geeigneter Neutralisationsmittel für in Kationen umwandelbare funktionelle Gruppen (b1) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen (b2) sind Ammoniak oder Amine, wie z.B. Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin oder Triethanolamin. Die Neutralisation kann in organischer Phase oder in wäßriger Phase erfolgen. Bevorzugt wird als Neutralisationsmittel Dimethylethanolamin und/oder Triethylamin eingesetzt.

Die Einführung von hydrophilen funktionellen (potentiell) kationischen Gruppen (b1) in die Polyurethanpräpolymere (B1) erfolgt über den Einbau von Verbindungen, die mindestens eine, insbesondere zwei, gegenüber Isocyanatgruppen reaktive und mindestens eine zur Kationenbildung befähigte Gruppe im Molekül enthalten; die einzusetzende Menge kann aus der angestrebten Aminzahl berechnet werden.

Geeignete gegenüber Isocyanatgruppen reaktive Gruppen sind die vorstehend beschriebenen, insbesondere Hydroxylgruppen sowie primäre und/oder sekundäre Aminogruppen, von denen die Hydroxylgruppen bevorzugt verwendet werden.

Beispiele geeigneter Verbindungen dieser Art sind 2,2-Dimethylolethyl- oder - propylamin, die mit einem Keton blockiert sind, wobei die resultierende Ketoximgruppe vor der Bildung der kationischen Gruppe (b1) wieder hydrolysiert wird, oder N,N-Dimethyl-, N,N-Diethyl- oder N-Methyl-N-ethyl-2,2-dimethylolethyl- oder -propylamin.

Die Einführung von hydrophilen funktionellen (potentiell) anionischen Gruppen (b2) in die Polyurethanpräpolymere (B1) erfolgt über den Einbau von Verbindungen, die mindestens eine gegenüber Isocyanatgruppen reaktive und mindestens eine zur Anionenbildung befähigte Gruppe im Molekül enthalten; die einzusetzende Menge kann aus der angestrebten Säurezahl berechnet werden.

Beispiele geeigneter Verbindungen dieser Art sind solche, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Beispiele geeigneter Alkansäuren sind Dihydroxypropionsäure, Dihydroxybemsteinsäure und Dihydroxybenzoesäure. Eine besonders bevorzugte Gruppe von Alkansäuren sind die alpha,alpha-Dimethylolalkansäuren der allgemeinen Formel R²⁻C(CH₂OH)₂COOH, wobei R² für ein Wasserstoffatom oder eine Alkylgruppe mit bis zu etwa 20 Kohlenstoffatomen steht. Beispiele besonders gut geeigneter Alkansäuren sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise 3,4-Diaminobenzoesäure, 2,4-Diaminotoluolsulfonsäure und 2,4-Diaminodiphenylethersulfonsäure.

Hydrophile funktionelle nichtionische Pöly(oxyalkylen)gruppen (b3) können als laterale oder endständige Gruppen in die Polyurethanmoleküle eingeführt werden. Hierfür können neben den vorstehend beschriebenen Polyetherdiolen beispielsweise Alkoxypoly(oxyalkylen)alkohole mit der allgemeinen Formel R³O-(-CH₂-CHR⁴-O-)ᵣH in der R³ für einen Alkylrest mit 1 bis 6 Kohlenstoffatomen, R⁴ für ein Wasserstoffatom oder einen Alkylrest mit 1 bis 6 Kohlenstoffatomen und der Index r für eine Zahl zwischen 20 und 75 steht, eingesetzt werden. (vgl. die Patentschriften EP-A-0 354 261 oder EP-A-0 424 705).

Die Auswahl der hydrophilen funktionellen Gruppen (b1) oder (b2) ist so zu treffen, daß keine störenden Reaktionen, wie etwa Salzbildung oder Vernetzung mit den funktionellen Gruppen, die gegebenenfalls in den übrigen Bestandteilen der erfindungsgemäßen Polyurethane (B), der Pfropfmischpolymerisate, der Beschichtungsstoffe, der Dichtungsmassen oder der Klebstoffe vorliegen, möglich sind. Der Fachmann kann daher die Auswahl in einfacher Weise anhand seines Fachwissens treffen.

Von diesen hydrophilen funktionellen (potentiell) ionischen Gruppen (b1) und (b2) und den hydrophilen funktionellen nichtionischen Gruppen (b3) sind die (potentiell) anionischen Gruppen (b2) vorteilhaft und werden deshalb besonders bevorzugt verwendet.

Die Herstellung der vorstehend beschriebenen Polyurethanpräpolymere (B1) aus den vorstehend beschriebenen Ausgangsverbindungen (B1.1) bis (B1.7) weist gleichfalls keine methodischen Besonderheiten auf, sondern erfolgt in Masse oder in einem inerten organischen Medium, vorzugsweise in einem inerten organischen Medium, wobei polare organische Lösemittel, insbesondere wassermischbare Lösemittel wie Ketone, Ester, Ether, cyclische Amide oder Sulfoxide, bevorzugt angewandt werden. Hierbei kann die Umsetzung in mehreren Stufen oder in einer Stufe erfolgen. Wesentlich ist, daß die Umsetzung so lange erfolgt, bis der Gehalt an freien Isocyanatgruppen konstant ist.

Das erfindungsgemäß zu verwendende Polyurethanpräpolymer (B1) wird in einem weiteren Verfahrensschritt mit mindestens einer Verbindung (B1.3) mit mindestens zwei, vorzugsweise mindestens drei und insbesondere drei isocyanatreaktiven funktionellen Gruppen umgesetzt. Beispiele geeigneter isocyanatreaktiver funktioneller Gruppen sind die vorstehend beschriebenen, von denen die Hydroxylgruppen und die Aminogruppen, insbesondere aber die Hydroxylgruppen, von besonderem Vorteil sind und erfindungsgemäß bevorzugt verwendet werden.

Demnach handelt es sich bei den bevorzugten Verbindungen (B1.3) um Polyamine, Polyole und Aminoalkohole.

Beispiele geeigneter Polyole (B1.3) sind die vorstehend beschriebenen niedermolekularen Polyole (B1.2), Tetrole wie Pentaerythrit oder Homopentaerythrit oder Zuckeralkohole wie Threit oder Erythrit oder Pentite wie Arabit, Adonit oder Xylit oder Hexite wie Sorbit, Mannit oder Dulcit.

Beispiele geeigneter Polyamine (B1.3) weisen mindestens zwei primäre und/oder sekundäre Aminogruppen auf. Polyamine (B1.3) sind im wesentlichen Alkylenpolyamine mit 1 bis 40 Kohlenstoffatomen, vorzugsweise etwa 2 bis 15 Kohlenstoffatomen. Sie können Substituenten tragen, die keine mit IsocyanatGruppen reaktionsfähige Wasserstoffatome haben. Beispiele sind Polyamine (B1.3) mit linearer oder verzweigter aliphatischer, cycloaliphatischer oder aromatischer Struktur und wenigstens zwei primären Aminogruppen.

Als Diamine (B1.3) sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin oder 4,4'-Diaminodicyclohexylmethan. Bevorzugte Diamine (B1.8) sind Hydrazin, Alkyl- oder Cycloalkyldiamine wie Propylendiamin und 1-Amino-3-aminomethyl-3,5,5-trimethylcyclohexan.

Es können auch Polyamine (B1.3) eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine (B1.3) sind Diethylentriamin, Triethylentetramin, Dipropylendiamin und Dibutylentriamin. Als Beispiel für ein Monoamin ist Ethylhexylamin zu nennen (vgl. die Patentschrift EP-A- 0 089 497).

Beispiele geeigneter Aminoalkohole (B1.3) sind Ethanolamin, Diethanolamin oder Triethanolamin.

Von diesen Verbindungen (B1.3) bietet Trimethylolpropan die meisten Vorteile und wird deshalb erfindungsgemäß ganz besonders bevorzugt verwendet.

Auch die Umsetzung der Polyurethanpräpolymeren (B1) mit den Verbindungen (B1.3) weist keine methodischen Besonderheiten auf, sondern erfolgt in Masse oder in einem inerten organischen Medium, vorzugsweise in einem inerten organischen Medium, wobei die vorstehend beschriebenen polaren organischen Lösemittel bevorzugt angewandt werden. Wesentlich ist, daß die Umsetzung so lange erfolgt, bis keine freien lsocyanatgruppen mehr nachweisbar sind.

Erfindungsgemäß wird das resultierende Polyurethan mit mindestens einem Anhydrid einer alpha,beta-ungesättigten Carbonsäure umgesetzt, wodurch das erfindungsgemäße Polyurethan (B) resultiert.

Beispiele geeigneter Anhydride sind Acrylsäure-, Methacrylsäure-, Ethacrylsäure- oder Zimtsäureanhydrid, von denen das Methacrylsäureanhydrid besonders vorteilhaft ist und deshalb erfindungsgemäß besonders bevorzugt verwendet wird.

Erfindungsgemäß variiert die Menge des erfindungsgemäß zu verwendenden Anhydrids sehr breit. Nach oben ist sie durch die Anzahl der anhydridreaktiven funktionellen Gruppen in den Polyurethanen begrenzt. Die untere Grenze richtet sich vor allem nach der Anzahl der olefinisch ungesättigten Gruppen pro Molekül, die für eine gute Pfropfung der Monomeren (a) notwendig sind. Der Fachmann kann daher die Menge des erfindungsgemäß zu verwendenden Anhydrids aufgrund seines Fachwissens gegebenenfalls unter Zuhilfenahme einfacher orientierender Versuche ermitteln. Erfindungsgemäß ist es von Vorteil, das Anhydrid in einer Menge von 0,01 bis 02 Mol pro Kilogramm Polyurethan zu verwenden.

Der Gehalt der erfindungsgemäßen Polyurethane (B) an olefinisch ungesättigten Gruppen, die über die erfindungsgemäß zu verwendenden Anhydride eingeführt werden, kann daher sehr breit variieren. Vorzugsweise liegt er bei 0,01 bis 3, bevorzugt 0,1 bis 2,5, besonders bevorzugt 0,2 bis 2,0, ganz besonders bevorzugt 0,25 bis 1,5 und insbesondere 0,3 bis 1,0 Gew.-%, jeweils bezogen auf das erfindungsgemäße Polyurethan.

Die Umsetzung der Polyurethane mit den Anhydriden weist keine methodischen Besonderheiten auf. Vorzugsweise erfolgt sie unmittelbar nach der Herstellung des Polyurethans in der betreffenden Reaktionsmischung.

Die erfmdungsgemäßen Polyurethane (B) können bereits als solche für die Herstellung von Beschichtungsstoffen, insbesondere Lacken, Klebstoffen und Dichtungsmassen verwendet werden.Diese können aufgrund ihres Gehalts an olefinisch ungesättigten Gruppen auch mit aktinischer Strahlung oder thermisch und mit aktinischer Strahlung (Dual Cure) härtbar sein. Als aktinische Strahlung kommt elektromagnetische Strahlung wie nahes Infrarotlicht (NIR), sichtbares Licht, UV-Strahlung oder Röntgenstrahlung und/oder Korpuskularstrahlung wie Elektronenstrahlung in Betracht.

Ihr wesentlicher Verwendungszweck ist indes die Herstellung der erfindungsgemäßen Pfropfmischpolymerisate.

Zu diesen Zweck werden die erfindungsgemäßen Polyurethane (B) in organischer Lösung oder in einer Dispersion mit mindestens einem Monomeren (a) gepfropft. Erfindungsgemäß ist es von Vorteil die erfindungsgemäßen Polyurethane (B) in Dispersion in einem wäßrigen Medium umzusetzen.

Das wäßrige Medium enthält im wesentlichen Wasser. Hierbei kann das wäßrige Medium in untergeordneten Mengen, organische Lösemittel, Neutralisationsmittel, Vernetzungsmittel und/oder lackübliche Additive und/oder sonstige gelöste feste, flüssige oder gasförmige organische und/oder anorganische, nieder- und/oder hochmolekulare Stoffe enthalten. Im Rahmen der vorliegenden Erfindung ist unter dem Begriff "untergeordnete Menge" eine Menge zu verstehen, welche den wäßrigen Charakter des wäßrigen Mediums nicht aufhebt. Bei dem wäßrigen Medium kann es sich aber auch um reines Wasser handeln.

Zum Zweck der Dispergierung werden die hydrophilen erfindungsgemäßen Polyurethane (B), die die vorstehend beschriebenen (potentiell) ionischen hydrophilen funktionellen Gruppen (b1) oder (b2) enthalten, mit mindestens einem der vorstehend beschriebenen Neutralisationsmittel neutralisiert und hiernach dispergiert. Bei den hydrophilen erfindungsgemäßen Polyurethanen (B), die nur die nichtionischen hydrophilen funktionellen Gruppen (b3) enthalten, erübrigt sich die Anwendung von Neutralisationsmitteln.

Auch die hydrophoben erfindungsgemäßen Polyurethane (B) können in einem wäßrigen Medium dispergiert werden. Vorteilhafterweise wird dies in einem starken Scherfeld durchgeführt. Methodisch gesehen weist dieses Verfahren keine Besonderheiten auf, sondern kann beispielsweise nach den in der europäischen Patentanmeldung EP-A-0 401 565 beschriebenen Dispergierverfahren erfolgen.

Die hierbei resultierenden erfindungsgemäßen primären Polyurethandispersionen (B) sind ebenfalls für die Herstellung wäßriger Beschichtungsstoffe, Klebstoffe und Dichtungsmassen geeignet.

Beispiele für Monomere (a), die für die Herstellung der erfindungsgemäßen Pfropfmischpolymerisate geeignet sind, sind:

### Monomere (a1):

Hydroxyalkylester der Acrylsäure, Methacrylsäure einer anderen alpha,beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure, Crotonsäure oder Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, - methacrylat, -ethacrylat oder -crotonat; 1,4-Bis(hydroxymethyl)cyclohexan-, Octahydro-4,7-methano-1 H-inden-dimethanol- oder Methylpropandiolmonoacrylat, -monomethacrylat, -monoethacrylat oder - monocrotonat; oder Umsetzungsprodukte aus cyclischen Estern, wie z.B. epsilon-Caprolacton und diesen Hydroxyalkylestern; oder olefinisch ungesättigte Alkohole wie Allylalkohol oder Polyole wie Trimethylolpropanmono- oder diallylether oder Pentaerythritmono-, -di- oder -triallylether. Diese höherfunktionellen Monomeren (a1) werden im allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der Polyacrylatharze führen. So kann der Anteil an Trimethylolpropandiallylether 2 bis 10 Gew.%, bezogen auf das Gesamtgewicht der zur Herstellung des Polyacrylatharzes eingesetzten Monomeren (a1) bis (a6) betragen.

### Monomere (a2):

(Meth)Acrylsäure-, Crotonsäure- oder Ethacrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat, -methacrylat, -crotonat oder -ethacrylat; cycloaliphatische (Meth)acrylsäure-, Crotonsäure- oder Ethacrylsäureester, insbesondere Cyclohexyl-, Isobornyl-, Dicyclopentadienyl-, Octahydro-4,7-methano-1 H-indenmethanol- oder tert.-Butylcyclohexyl(meth)acrylat, -crotonat oder -ethacrylat; (Meth)Acrylsäure-, Crotonsäure- oder Ethacrylsäureoxaalkylester oder - oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäure-, Crotonsäure- oder Ethacrylsäurederivate. Diese können in untergeordneten Mengen höherfunktionelle (Meth)Acrylsäure-, Crotonsäure- oder Ethacrylsäurealkyl- oder -cycloallcylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1 H-inden-dimethanol- oder Cyclohexan-1,2-, -1,3- oder - 1,4-diol-di(meth)acrylat; Trimethylolpropan-di- oder tri(meth)acrylat; oder Pentaerythrit-di-, -tri- oder -tetra(meth)acrylat sowie die analogen Ethacrylate oder Crotonate; enthalten. Im Rahmen der vorliegenden Erfindung sind hierbei unter untergeordneten Mengen an höherfunktionellen Monomeren (a2) solche Mengen zu verstehen, welche nicht zur Vernetzung oder Gelierung der Polyacrylatharze führen.

### Monomere (a3):

Mindestens eine Säuregruppe, vorzugsweise eine Carboxylgruppe, pro Molekül tragende ethylenisch ungesättigte Monomer oder ein Gemisch aus solchen Monomeren. Als Komponente (a3) werden besonders bevorzugt Acrylsäure und/oder Methacrylsäure eingesetzt. Es können aber auch andere ethylenisch ungesättigte Carbonsäuren mit bis zu 6C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren, bzw. deren Teilester, als Komponente (a3) verwendet werden. Als Monomere (a3) kommen desweiteren Maleinsäuremono(meth)acryloyloxyethylester, Berasteinsäuremono(meth)acryloyloxyethylester und Phthalsäuremono(meth)acryloyloxyethylester in Betracht.

### Monomere (a4):

Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylenftimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfiigbarkeit - Vinylester von gesättigten aliphatischen Monocarbonsäuren mit 9 bis 11 C-Atomen, die am alpha-C-Atom verzweigt sind, eingesetzt.

### Monomere (a5):

Umsetzungsprodukt aus Acrylsäure und/oder Methacrylsäure mit dem Glycidylester einer in alpha-Stellung verzweigten Monocarbonsäure mit 5 bis 18 C-Atomen je Molekül. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, 1998, Seiten 605 und 606, verwiesen.

### Monomere (a6):

Im wesentlichen säuregruppenfreie ethylenisch ungesättigte Monomere wie
- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;
- (Meth)Acrylsäureamide wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- und/oder N,N-Cyclohexyl-methyl-(meth)acrylsäureamid;
- Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;
- vinylaromatische Kohlenwasserstoffe, wie Styrol, alpha-Alkylstyrole, insbesondere alpha-Methylstyrol, Arylstyrole, insbesondere Diphenylethylen, und/oder Vinyltoluol;
- Nitrile wie Acrylnitril und/oder Methacrylnitril;
- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat, Vinylester der Versatic®-Säuren, die unter dem Markennamen VeoVa® von der Firma Deutsche Shell Chemie vertrieben werden (ergänzend wird auf Römpp Lexikon Lacke und Druckfarben, Georg Thieme Verlag, Stuttgart, New York, 1998, Seite 598 sowie Seiten 605 und 606, verwiesen) und/oder der Vinylester der 2-Methyl-2-ethylheptansäure; und/oder
- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Aus diesen vorstehend beispielhaft beschriebenen geeigneten Monomeren (a) kann der Fachmann die für den jeweiligen Verwendungszweck besonders gut geeigneten Monomeren (a) anhand ihrer bekannten physikalisch chemischen Eigenschaften und Reaktivitäten leicht auswählen. Gegebenenfalls kann er zu diesem Zwecke einige wenige orientierende Vorversuche durchführen. Insbesondere wird er hierbei darauf achten, daß die Monomeren (a) keine funktionellen Gruppen, insbesondere (potentiell) ionische funktionelle Gruppen, enthalten, die mit den (potentiell) ionischen funktionellen Gruppen in den hydrophilen erfindungsgemäßen Polyurethanen (B) unerwünschte Wechselwirkungen eingehen.

Erfindungsgemäß resultieren besondere Vorteile, wenn die Monomeren (a) so ausgewählt werden, daß das Eigenschaftsprofil der aufgepfropften (Co)Polymerisate im wesentlichen von den vorstehend beschriebenen (Meth)Acrylatmonomeren (a) bestimmt wird, wobei die anderen Monomeren (a) dieses Eigenschaftsprofil in vorteilhafter Weise breit variieren.

Erfindungsgemäß resultieren ganz besondere Vorteile, wenn Gemische der Monomeren (a1), (a2) und (a6) sowie gegebenenfalls (a3) verwendet werden.

Methodisch gesehen weist die Herstellung der erfindungsgemäßen Pfropfmischpolymerisate keine Besonderheiten auf, sondern erfolgt nach den üblichen und bekannten Methoden der radikalischen Emulsionspolymerisation in Gegenwart mindestens eines Polymerisationsinitiators, so wie sie beispielsweise in den Patentschriften DE-C-197 22 862, DE-A-196 45 761, EP-A-0 522 419 oder EP-A-0 522 420 beschrieben wird.

Hierbei können die Monomeren (a) auch mit Hilfe eines Teils einer erfindungsgemäßen Polyurethandispersion (B) und Wasser in eine Präemulsion gebracht werden, die dann langsam einer Vorlage zudosiert wird, worin die eigentliche Emulsionspolymerisation abläuft.

Beispiele geeigneter Polymerisationsinitiatoren sind freie Radikale bildende Initiatoren wie Dialkylperoxide, wie Di-tert.-Butylperoxid oder Dicumyl-peroxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid. Bevorzugt werden wasserunlösliche Initiatoren verwendet. Die Initiatoren werden bevorzugt in einer Menge von 0,1 bis 25 Gew.%, besonders bevorzugt von 2 bis 10 Gew.%, bezogen auf das Gesamtgewicht der Monomeren (a), eingesetzt.

In den wäßrigen Emulsionen werden dann die Monomeren (a) mit Hilfe der vorstehend genannten radikalbildenden Initiatoren bei Temperaturen von 0 bis 95°C, vorzugsweise 40 bis 95 °C, und bei Verwendung von Redoxsystemen bei Temperaturen von 30 bis 70 °C polymerisiert. Bei Arbeiten unter Überdruck kann die Polymerisation auch bei Temperaturen oberhalb 100 °C durchgeführt werden.

Es ist bevorzugt, daß mit dem Initiatorzulauf einige Zeit, im allgemeinen ca. 1 bis 15 Minuten, vor dem Zulauf der Monomeren begonnen wird. Ferner ist ein Verfahren bevorzugt, bei dem die Initiatorcugabe zum gleichen Zeitpunkt wie die Zugabe der Monomeren begonnen und etwa eine halbe Stunde, nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.% der eingesetzten Monomere umgesetzt worden sind, daß es aber auch möglich ist, daß ein geringer Restmonomerengehalt von höchstens bis zu etwa 0,5 Gew.%, bezogen auf das Gewicht der Reaktionsmischung, unumgesetzt zurückbleiben kann.

Als Reaktoren für die Pfropfmischpolymerisation kommen die üblichen und bekannten Rührkessel, Rührkesselkaskaden, Rohrreaktoren, Schlaufenreaktoren oder Taylorreaktoren, wie sie beispielsweise in den Patentschriften DE-B-1 071 241 oder EP-A-0 498 583 oder in dem Artikel von K. Kataoka in Chemical Engineering Science, Band 50, Heft 9, 1995, Seiten 1409 bis 1416, beschrieben werden, in Betracht.

Erfindungsgemäß ist es von Vorteil, die erfmdungsgemäßen Polyurethane (B) und die Monomeren (a) so auszuwählen, daß das aufgepfropften Copolymerisat (A) und/oder das gepfropfte hydrophile Polyurethan (B), insbesondere aber das gepfropfte hydrophile Polyurethan (B), hydrophile funktionelle Gruppen, insbesondere Carbonsäuregruppen und/oder Carboxylatgruppen, enthalten.

In den erfindungsgemäßen Pfropfmischpolymerisaten kann das Mengenverhältnis von Kern zu Schale außerordentlich breit variieren, was ein besonderer Vorteil der erfindungsgemäßen Pfropfmischpolymerisate ist. Vorzugsweise liegt dieses Verhältnis bei 1 : 100 bis 100 : 1, bevorzugt 1 : 50 bis 50 : 1, besonders bevorzugt 30 : 1 bis 1 : 30, ganz besonders bevorzugt 20 : 1 bis 1 : 20 und insbesondere 10 : 1 bis 1 : 10.

Bei der erfmdungsgemäß bevorzugten Verwendung (potentiell) anionischer hydrophiler funktioneller Gruppen (b2), insbesondere von Carbonsäuregruppen, resultieren weitere besondere Vorteile, wenn in den erfindungsgemäßen Pfropfmischpolymerisaten das Verhältnis von Säurezahl der Schale zu Säurezahl des Kerns > 1, vorzugsweise > 3, bevorzugt > 5, besonders bevorzugt > 7, ganz besonders bevorzugt > 9 und insbesondere > 10 ist.

Die erfindungsgemäßen Pfropfmischpolymerisate können aus den Primärdispersionen, in denen sie anfallen, isoliert und den unterschiedlichsten Verwendungszwecken, insbesondere in lösemittelhaltigen, wasser- und lösemittelfreien pulverFörmigen festen oder wasser- und lösemittelfreien flüssigen Beschichtungsstoffen, Klebstoffen und Dichtungsmassen, zugeführt werden.

Erfindungsgemäß ist es indes von Vorteil, die Primärdispersionen als solche für die Herstellung von wäßrigen Beschichtungsstoffen, Klebstoffen und Dichtungsmassen oder als wäßrige Beschichtungsstoffe, Klebstoffe und Dichtungsmassen zu verwenden. In der Verwendung als Beschichtungsstoffe zeigen sie hervorragende Filmbildungeigenschaften.

Die erfindungsgemäßen wäßrigen Klebstoffe können außer den erfindungsgemäßen Pfropfmischpolymerisaten weitere geeignete übliche und bekannte Bestandteile in wirksamen Mengen enthalten. Beispiele geeigneter Bestandteile sind die nachstehend beschriebenen Vernetzungsmittel und Additive, soweit sie für die Herstellung von Klebstoffen in Betracht kommen.

Die erfmdungsgemäßen wäßrigen Dichtungsmassen können ebenfalls außer den erfindungsgemäßen Pfropfmischpolymerisaten weitere geeignete übliche und bekannte Bestandteile in wirksamen Mengen enthalten. Beispiele geeigneter Bestandteile sind ebenfalls die nachstehend beschriebenen Vernetzungsmittel und Additive, soweit sie für die Herstellung von Dichtungsmassen in Betracht kommen.

Die Primärdispersionen der erfindungsgemäßen Pfropfmischpolymerisate sind vor allem für die Herstellung wäßriger Beschichtungsstoffe, insbesondere wäßriger Lacke, geeignet. Beispiele für erfindungsgemäße wäßrige Lacke sind Füller, Unidecklacke, Wasserbasislacke und Klarlacke. Ganz besondere Vorteile entfalten die erfindungsgemäßen Primärdispersionen, wenn sie zur Herstellung der Wasserbasislacke verwendet werden.

In den Wasserbasislacken sind die erfindungsgemäßen Pfropfmischpolymerisate vorteilhafterweise in einer Menge von 1,0 bis 50, bevorzugt 2,0 bis 40, besonders bevorzugt 3,0 bis 35, ganz besonders bevorzugt 4,0 bis 30 und insbesondere 5,0 bis 25 Gew.%, jeweils bezogen auf das Gesamtgewicht des jeweiligen Wasserbasislacks, enthalten.

Der weitere wesentliche Bestandteil des Wasserbasislacks ist mindestens ein farb- und/oder effektgebendes Pigment. Die Pigmente können aus anorganischen oder organischen Verbindungen bestehen. Der erfindungsgemäße Wasserbasislack gewährleistet daher aufgrund dieser Vielzahl geeigneter Pigmente eine universelle Einsatzbreite und ermöglicht die Realisierung einer Vielzahl von Farbtönen und optischer Effekte. Beispiele geeigneter Pigmente gehen aus Römpp Lexikon Lacke und Druckfarben, Georg Thieme Verlag, 1998, Seiten 176, »Effektpigmente«; Seiten 380 und 381 »Metalloxid-Glimmer-Pigmente« bis »Metallpigmente«; Seiten 180 und 181, »Eisenblau-Pigmente« bis »Eisenoxidschwarz«; Seiten 451 bis 453, »Pigmente« bis »Pigmentsvolumenkonzentration«; Seite 563, »Thioindigo-Pigmente«; und Seite 567, »Titandioxid-Pigmente«; hervor.

Der Wasserbasislack kann mindestens ein Vernetzungsmittel enthalten.

Beispiele geeigneter Vernetzungsmittel sind Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispeilsweise Umsetzungsprodukte von Malonsäurediestern und Polyisocyanaten oder von Estern und Teilestern mehrwertiger Alkohole der Malonsäure mit Monoisocyanaten, wie sie der europäischen Patentschrift EP-A-0 596 460 beschrieben werden.

Derartige Vernetzungsmittel sind dem Fachmann gut bekannt und werden von zahlreichen Firmen als Verkaufsprodukte angeboten.

Zusätzlich zu den vorstehend beschriebenen Bestandteilen kann der erfindungsgemäße Wasserbasislack übliche und bekannte Bindemittel und/oder Additive in wirksamen Mengen enthalten.

Beispiele üblicher und bekannter Bindemittel sind oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE-A-197 36 535 beschriebenen, Polyester, insbesondere die in den Patentschriften DE-A-40 09 858 oder DE-A-44 37 535 beschriebenen, Alkyde, acrylierte Polyester, Polylactone, Polycarbonate, Polyether, Epoxidharz-Amin-Addukte, (Meth)Acrylatdiole, partiell verseifte Polyvinylester, Polyurethane und acrylierte Polyurethane, wie die in den Patentschriften EP-A-0 521 928, EP-A-0 522 420, EP-A-0 522 419, EP-A-0 730 613 oder DE-A-44 37 535 beschriebenen, oder Polyharnstoffe

Beispiele geeigneter Additive sind organische und anorganische Füllstoffe, thermisch härtbare Reaktiverdünner, niedrig siedende und/oder hochsiedende organische Lösemittel ("lange Lösemittel"), UV-Absorber, Lichtschutzmittel, Radikalf'anger, thermolabile radikalische Initiatoren, Katalysatoren für die Vernetzung, Entlüftungsmittel, Slipadditive, Polymerisationsinhibitoren, Entschäumer, Emulgatoren, Netzmittel, Haftvermittler, Verlaufinittel, filmbildende Hilfsmittel, rheologiesteuernde Additive oder Flammschutzmittel. Weitere Beispiele geeigneter Lackadditive werden in dem Lehrbuch »Lackadditive« von Johan Bieleman, Wiley-VCH, Weinheim, New York, 1998, beschrieben.

Die Herstellung des Wasserbasislacks weist keine Besonderheiten auf, sondern erfolgt in üblicher und bekannter Weise durch Vermischen der vorstehend beschriebenen Bestandteile in geeigneten Mischaggregaten wie Rührkessel, Dissolver oder Extruder nach den für die Herstellung der jeweiligen Wasserbasislacke geeigneten Verfahren.

Der Wasserbasislack ist hervorragend für die Herstellung farb- und/oder effektgebender Mehrschichtlackierungen nach dem Naß-in-naß-Verfahren geeignet, bei dem eine Wasserbasislackschicht appliziert, getrocknet und mit einer Klarlackschicht überschichtet wird, wonach Wasserbasislackschicht um Klarlackschicht gemeinsam gehärtet werden. Bekanntermaßen wird dieses Verfahren bei der Kraftfahrceugerstlackierung und -reparaturlackierung mit Vorteil angewandt.

Darüber hinaus kommen aber die Beschichtungsstoffe wegen ihrer besonders vorteilhaften Eigenschaften auch für die Lackierung von Möbeln und die industrielle Lackierung, inklusive Coil Coating, Container Coating und die Imprägnierung oder Beschichtung elektrotechnischer Bauteile, in Betracht. Im Rahmen der industriellen Lackierungen eignen sie sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

### Beispiele

### Beispiel 1

### Die Herstellung einer erfindungsgemäßen Polyurethandispersion (B)

In einem Reaktionsgefäß, ausgerüstet mit Rührer, Innenthermometer, Rückflußkühler und elektrischer Heizung, wurden 755,4 Gewichtsteile eines linearen Polyesterpolyols (hergestellt aus dimerisierter Fettsäure (Pripol®1013), Isophthalsäure und Hexan-1,6-diol) mit einer Hydroxylzahl von 80 und einem zahlenmittleren Molekulargewicht von 1.400 Dalton, 13,8 Gewichtsteile Neopentylglykol, 67,2 Gewichtsteile Dimethylolpropionsäure und 363,6 Gewichtsteile 4,4'-Dicyclohexylmethandiisocyanat (Desmodur® W der Firma Bayer AG) in 400 Gewichtsteilen Methylethylketon bei 86 °C so lange miteinander umgesetzt, bis der Gehalt an Isocyanatgruppen konstant war. Anschließend wurden zudem resultierenden Polyurethanpräpolymeren (B1) 0,95 Mol Trimethylolpropan pro Mol an restlichen freien Isocyanatgruppen hinzugegeben. Die resultierende Reaktionsmischung wurde mit Methylethylketon verdünnt, so daß ein Festkörpergehalt von 67,5 Gew.% resultierte. Hiernach wurde die Reaktionsmischung so lange bei 82 °C gehalten, bis der Gehalt an freien Isocyanatgruppen unter 0,25 Gew.% abgesunken war. Das resultierende Polyurethan wies danach eine Platte-Kegel-Viskosität von 7,5 bis 9,0 dPas, gemessen an einer Lösung in N-Methylpyrrolidon im Gewichtsverhältnis 1 : 1 bei 23 °C und einem Schergefälle von 1.000/s, auf.

Die Lösung des Polyurethans in Methylethylketon wurde mit 0,05 Mol Methacrylsäureanhydrid pro Kilogramm Festharz versetzt und während zwei Stunden bei 82 °C gehalten, bis die Säurezahl nicht mehr weiter absank. Hiernach wurde die Lösung mit, bezogen auf den Festkörpergehalt, 10 Gew.-% Butyldiglykol verdünnt, mit Dimethylethanolamin bei 80 bis 85 °C zu 51 Mol-% neutralisiert und in 2.000 Gewichtsteilen deionisiertem Wasser dispergiert. Anschließend wurde das Methylethylketon im Vakuum abdestilliert. Die resultierende erfindungsgemäße Dispersion (B) wurde mit deionisiertem Wasser auf einen Festkörpergehalt-von 36 Gew.% eingestellt. Je nach Verdünnung wies sie einen pH-Wert von 7,0 bis 7,5 auf.

### Beispiel 2

### Die Herstellung eines erfindungsgemäßen Pfropfmischpolymerisats

In einem geeigneten Reaktionsgefäß, daß mit Rührer, Rückflußkühler, Innentemperatursteuerung und zwei Zulaufgefäßen ausgestattet war, wurden 2.222,2 Gewichtsteile der Polyurethandispersion gemäß Beispiel 1 vorgelegt. In dem ersten Zulaufgefäß wurde ein Gemisch aus 137,2 Gewichtsteilen Methylmethacrylat, 145,7 Gewichtsteilen n-Butylacrylat, 34,3 Gewichtsteilen Hydroxypropylmethacrylat, 22,6 Gewichtsteilen Methacrylsäure und 23,4 Gewichtsteilen Dimethylethanolamin zu 100 %igen Neutralisation der Methacrylsäure vorgelegt. Im zweiten Zulaufgefäßen wurde eine Lösung von 3,4 Gewichtsteilen tert.-Butylperoxyethylhexanoat (1% bezogen auf die Summe der Monomeren) in 34 Gewichtsteilen Butyldiglykol vorgelegt. Die Vorlage wurde auf 80 bis 85 °C erhitzt. Bei dieser Temperatur wurden 10% der Monomerenmischung innerhalb von fünf Minuten unter Rühren zudosiert. Nach weiteren zehn Minuten wurden 10% der Initiatorlösung zugesetzt. Hiernach ließ man die resultierende Reaktionsmischung während 30 Minuten reagieren. Anschließend wurden die restliche Monomerenmischung während drei Stunden und die restliche Initiatorlösung während 3,5 Stunden zudosiert. Nach der Beendigung des Initiatorzulaufs ließ man die Reaktionsmischung noch weitere 1,5 Stunden bei 80 bis 85 °C nachpolymerisieren. Anschließend wurden 430 Gewichtsteile Butyldiglykol und 552 Gewichtsteile deionisiertes Wasser zugegeben. Die resultierende Dispersion besaß ein Festkörpergehalt von 32 Gew.-% mit einem Colösemittelanteil von 14 Gew.% (Butyldiglykol). Sie wies kein Koagulat auf: ein 50µm starker Glasaufzug ist sehr sauber, glasklar und trocknet über Nacht zu einem sehr harten, sehr gut haftenden Film. Der pH-Wert der Dispersion lag bei 6,8 mit. Ihre Viskosität, gemessen in einem Rotationsviskosimeter, betrug bei einem Schergefälle von 100/s 130 mPas und bei einem Schergefälle von 1.000/s 77 mPas.

Die Primärdispersion des erfindungsgemäßen Pfropfmischpolymerisats war hervorragend für die Herstellung von Wasserbasislacken und Füllern geeignet.

### Beispiel 3

### Die Herstellung eines erfindungsgemäßen Pfropfmischpolymerisats

Die Pfropfmischpolymerisation des Beispiels 2 wurde wiederholt, nur daß die folgenden Monomeren (a) und Lösemittel in den folgenden Mengen verwendet wurden:

| Zulauf 1: | |
|---|---|
| 68,7 | Gewichtsteile Methylmethacrylat, |
| 214,2 | Gewichtsteile n-Butylacrylat, |
| 34,3 | Gewichtsteile Hydroxypropylmethacrylat, |
| 22,7 | Gewichtsteile Methacrylsäure, |
| 23,5 | Gewichtsteile Dimethylethanolamin zu 100 %igen Neutralisation der Methacrylsäure und |
| 153,6 | Gewichtsteile Butyldiglykol. |

Das resultierende Reaktionsgemisch wurde mit 433 Gewichtsteilen deionisiertem Wasser auf einen Festkörpergehalt von 36 Gew.% eingestellt. Die resultierende Dispersion besaß einen Colösemittelanteil von 9,7 Gew.%. Sie wies kein Koagulat auf ein 50µm starker Glasaufzug war sehr sauber, glasklar und trocknete über Nacht zu einem harten, sehr gut haftenden Film. Der pH-Wert der Dispersion lag bei 7,5 (1 : 1-Verdünnung mit Wasser). Ihre Viskosität, gemessen in einem Rotationsviskosimeter, betrug bei einem Schergefälle von 100/s 435 mPas und bei einem Schergefälle von 1.000/s 169 mPas.

Die Primärdispersion des erfindungsgemäßen Pfropfmischpolymerisats war hervorragend für die Herstellung von Wasserbasislacken, Füllern und Klebstoffen geeignet.

## Patentansprüche

1. Olefinisch ungesättigtes hydrophiles oder hydrophobes Polyurethan (B), herstellbar, indem man
(1) ein Polyurethanpräpolymer (B1), herstellbar, indem man zumindest
(B1.1) mindestens ein Polyisocyanat und
(B1.2) mindestens ein gesättigtes und/oder olefinisch ungesättigtes Polyesterpolyol, welches durch Umsetzung von
- gesättigten und/oder ungesättigten Polycarbonsäuren oder deren veresterungsfähigen Derivaten, sowie
- gesättigten und/oder ungesättigten Polyolen,
hergestellt wurde,
in einer oder in mehreren Stufen miteinander umsetzt, so daß im statistischen Mittel noch mindestens eine freie Isocyanatgruppe pro Molekül verbleibt;
mit
(2) mindestens einer Verbindung (B1.3) mit mindestens zwei isocyanatreaktiven funktionellen Gruppen umsetzt, so daß keine freien Isocyanatgruppen mehr nachweisbar sind, wonach man
(3) das resultierende Polyurethan mit mindestens einem Anhydrid einer alpha,beta-ungesättigten Carbonsäure umsetzt.

2. Das Polyurethan (B) nach Anspruch 1, **dadurch gekennzeichnet, daß** man für die Herstellung des Polyurethanpräpolymeren (B1)
(B1.4) mindestens eine Verbindung mit mindestens einer blockierten isocyanatgruppe und mindestens zwei isocyanatreaktiven funktionellen Gruppen und/oder
(B1.5) mindestens eine Verbindung mit mindestens einer olefinisch ungesättigten Gruppe und mindestens zwei isocyanatreaktiven funktionellen Gruppen
verwendet.

3. Das hydrophile Polyurethan (B) nach Anspruch 1 oder 2, **dadurch gekennzeichnet, daß** man zur Herstellung des Polyurethanpräpolymeren (B1)
(B1.6) mindestens eine Verbindung mit mindestens einer hydrophilen funktionellen Gruppe und mindestens zwei isocyanatreaktiven funktionellen Gruppen
verwendet.

4. Das Polyurethan (B) nach einem der Ansprüche 1 bis 3,**dadurch gekennzeichnet, daß** man zur Herstellung des Polyurethanpräpolymeren (B1) mindestens ein Blockierungsmittel (B1.7) für Isocyanatgruppen verwendet.

5. Das Polyurethan (B) nach einem der Ansprüche 1 bis 5, **dadurch gekennzeichnet, daß** man das Anhydrid der alpha,beta-ungesättigten Carbonsäure in einer Menge verwendet, daß das Polyurethan (B) im statistischen Mittel 0,1 bis 10 olefinisch ungesättigte Doppelbindungen im Molekül enthält.

6. Pfropfmischpolymerisat, enthaltend
(A) mindestens ein aufgepfropftes (Co)Polymerisat und
(B) mindestens ein Polyurethan,
herstellbar, indem man mindestens ein Monomer (a) in Lösung oder in Emulsion in Gegenwart mindestens eines Polyurethans (B) gemäß einem der Ansprüche 1 bis 5 radikalisch (co)polymerisiert.

7. Das Pfropfmischpolymerisat nach Anspruch 6, **dadurch gekennzeichnet, daß** das Polymerisat (A) ein (Meth)Acrylatcopolymerisat darstellt.

8. Das Pfropfmischpolymerisat nach Anspruch 6 oder 7, **dadurch gekennzeichnet, daß** das aufgepfropfte Copolymerisat (A) und/oder das gepfropfte Polyurethan (B) hydrophile funktionelle Gruppen, insbesondere Carbonsäuregruppen und/oder Carboxylatgruppen, enthalten.

9. Das Pfropfmischpolymerisat nach Anspruch 8, **dadurch gekennzeichnet, daß** das gepfropfte hydrophile Polyurethan (B) Carbonsäuregruppen und/oder Carboxylatgruppen enthält.

10. Die Verwendung der Polyurethane (B)- gemäß einem der Ansprüche 1 bis 5 und/oder der Pfropfmischpolymerisate gemäß einem der Ansprüche 6 bis 10 für die Herstellung von Dichtungsmassen, Klebstoffen und Beschichtungsstoffen.

11. Dichtungsmassen, Klebstoffe und Beschichtungsstoffe, **dadurch gekennzeichnet, daß** sie mindestens eines der Polyurethane (B) gemäß einem der Ansprüche 1 bis 5 und/oder eines der Pfropfmischpolymerisate gemäß einem der Ansprüche 6 bis 10 enthalten.

## Claims

1. Olefinically unsaturated hydrophilic or hydrophobic polyurethane (B) preparable by
(1) reacting a polyurethane prepolymer (B1) preparable by reacting at least
(B1.1) at least one polyisocyanate and
(B1.2) at least one saturated and/or olefinically unsaturated polyester polyol, which has been prepared by reacting,
- saturated and/or unsaturated polycarboxylic acids or their esterifiable derivatives, and
- saturated and/or unsaturated polyols
with one another in one or more stages so that on average there remains at least one free isocyanate group per molecule
with
(2) at least one compound (B1.3) containing at least two isocyanate-reactive functional groups, so that free isocyanate groups can no longer be detected, and then
(3) reacting the resulting polyurethane with at least one anhydride of an alpha,beta-unsaturated carboxylic acid.

2. The polyurethane (B) according to Claim 1, **characterized in that** the polyurethane prepolymer (B1) is prepared using
(B1.4) at least one compound containing at least one blocked isocyanate group and at least two isocyanate-reactive functional groups and/or
(B1.5) at least one compound containing at least one olefinically unsaturated group and at least two isocyanate-reactive functional groups.

3. The hydrophilic polyurethane (B) according to Claim 1 or 2, **characterized in that** the polyurethane prepolymer (B1) is prepared using
(B1.6) at least one compound containing at least one hydrophilic functional group and at least two isocyanate-reactive functional groups.

4. The polyurethane (B) according to any of Claims 1 to 3, **characterized in that** the polyurethane prepolymer (B1) is prepared using at least one blocking agent (B1.7) for isocyanate groups.

5. The polyurethane according to any of Claims 1 to 5, **characterized in that** the anhydride of the alpha,beta-unsaturated carboxylic acid is used in an amount such that the polyurethane (B) contains on average from 0.1 to 10 olefinically unsaturated double bonds per molecule.

6. Graft polymer comprising
(A) at least one grafted-on (co)polymer and
(B) at least one polyurethane
preparable by radically (co)polymerizing at least one monomer (a) in solution or in emulsion in the presence of at least one polyurethane (B) according to any of Claims 1 to 5.

7. The graft copolymer according to Claim 6, **characterized in that** the polymer (A) comprises a (meth)acrylate copolymer.

8. The graft copolymer according to Claim 6 or 7, **characterized in that** the grafted-on copolymer (A) and/or the grafted polyurethane (B) contain hydrophilic functional groups, especially carboxylic acid groups and/or carboxylate groups.

9. The graft copolymer according to Claim 8, **characterized in that** the grafted hydrophilic polyurethane (B) contains carboxylic acid groups and/or carboxylate groups.

10. The use of the polyurethanes (B) according to any of Claims 1 to 5 and/or of the graft copolymers according to any of Claims 6 to 10 for preparing sealing compounds, adhesives and coating materials.

11. Sealing compounds, adhesives and coating materials, **characterized in that** they comprise at least one of the polyurethanes (B) according to any of Claims 1 to 5 and/or one of the graft polymers according to any of Claims 6 to 10.

## Revendications

1. Polyuréthanne hydrophile ou hydrophobe à insaturation oléfinique (B) que l'on peut fabriquer en faisant réagir l'un avec l'autre en une ou plusieurs étapes :
(1) un prépolymère de polyuréthanne (B1), que l'on peut fabriquer en faisant au moins réagir
(B 1.1) au moins un polyisocyanate et
(B 1.2) au moins un polyol de polyester saturé et/ou à insaturation oléfinique qui a été fabriqué par réaction
- d'acides polycarboxyliques saturés et/ou insaturés ou de leurs dérivés estérifiables ainsi que
- de polyols saturés et/ou insaturés, de manière qu'il reste en moyenne statistique encore au moins un groupement isocyanate libre par molécule ; avec
(2) au moins un composé (B1.3) ayant au moins deux groupements fonctionnels réagissant aux isocyanates de sorte qu'aucun groupement isocyanate libre ne soit plus détectable, après quoi
(3) l'on fait réagir le polyuréthanne obtenu avec au moins un anhydride d'un acide carboxylique à insaturation alpha,bêta.

2. Polyuréthanne (B) selon la revendication 1, **caractérisé en ce que** l'on utilise pour fabriquer le prépolymère de polyuréthanne (B1)
(B 1.4) au moins un composé ayant au moins un groupement isocyanate bloqué et au moins deux groupements fonctionnels réagissant aux isocyanates et/ou
(B 1.5) au moins un composé ayant au moins un groupement à insaturation oléfinique et au moins deux groupements fonctionnels réagissant aux isocyanates.

3. Polyuréthanne hydrophile (B) selon la revendication 1 ou 2, **caractérisé en ce que** l'on utilise pour fabriquer le prépolymère de polyuréthanne (B1)
(B 1.6) au moins un composé ayant au moins un groupement hydrophile fonctionnel et au moins deux groupements fonctionnels réagissant aux isocyanates.

4. Polyuréthanne (B) selon l'une quelconque des revendications 1 à 3, **caractérisé en ce que** l'on utilise pour fabriquer le prépolymère de polyuréthanne (B1) au moins un agent bloquant (B1.7) pour les groupements isocyanate.

5. Polyuréthanne (B) selon l'une quelconque des revendications 1 à 5, **caractérisé en ce que** l'on utilise l'anhydride de l'acide carboxylique à insaturation alpha,bêta en quantité telle que le polyuréthanne (B) contienne en moyenne statistique 0,1 à 10 doubles liaisons à insaturation oléfinique dans la molécule.

6. Polymère mixte greffé, contenant
(A) au moins un (co)polymère greffé et
(B) au moins un polyuréthanne,
que l'on peut fabriquer en (co)polymérisant par voie radicalaire au moins un monomère (a) en solution ou en émulsion en présence d'au moins un polyuréthanne (B) selon l'une quelconque des revendications 1 à 5.

7. Polymère greffé selon la revendication 6, **caractérisé en ce que** le polymère (A) représente un copolymère de (méth)acrylate.

8. Polymère greffé selon la revendication 6 ou 7, **caractérisé en ce que** le copolymère greffé (A) et/ou le polyuréthanne greffé (B) contiennent des groupements fonctionnels hydrophiles, en particulier des groupements acide carboxylique et/ou des groupements carboxylate.

9. Polymère greffé selon la revendication 8, **caractérisé en ce que** le polyuréthanne greffé, hydrophile (B) contient des groupements acide carboxylique et/ou des groupements carboxylate.

10. Utilisation des polyuréthannes (B) selon l'une quelconque des revendications 1 à 5 et/ou des polymères greffés selon l'une quelconque des revendications 6 à 10, pour la fabrication de masses d'étanchéité, de colles et de matériaux de revêtement.

11. Masses d'étanchéité, colles et matériaux de revêtement, **caractérisés en ce qu'**ils contiennent au moins un des polyuréthannes (B) selon l'une quelconque des revendications 1 à 5 et/ou un des polymères mixtes greffés selon l'une quelconque des revendications 6 à 10.
